**Europäisches Patentamt**

**European Patent Office**

**Office européen des brevets**

(19)

(11) Veröffentlichungsnummer : **0 118 593**
**B1**

(12) # EUROPÄISCHE PATENTSCHRIFT

(45) Veröffentlichungstag der Patentschrift :
26.04.89

(21) Anmeldenummer : 83110644.8

(22) Anmeldetag : 25.10.83

(51) Int. Cl.⁴ : **B 65 G 47/24**, B 07 C 5/02

(54) **Teilezuführeinrichtung, insbesondere für Montage- bzw. Verpackungsmaschinen.**

**Teilanmeldung 87118613 eingereicht am 15.12.87.**

(30) Priorität : 25.10.82 AT 3901/82

(43) Veröffentlichungstag der Anmeldung :
19.09.84 Patentblatt 84/38

(45) Bekanntmachung des Hinweises auf die Patenterteilung : 26.04.89 Patentblatt 89/17

(84) Benannte Vertragsstaaten :
AT CH DE FR GB IT LI NL SE

(56) Entgegenhaltungen :
DE--A-- 2 842 053
DE--A-- 3 033 686
US--A-- 3 710 922

(73) Patentinhaber : STIWA-Fertigungstechnik Sticht
Gesellschaft m.b.H
Steinhüblstrasse 4
A-4800 Attnang-Puchheim (AT)

(72) Erfinder : Sticht, Walter
Karl-Heinrich-Waggerl-Strasse 8
A-4800 Attnang-Puchheim (AT)

(74) Vertreter : Wolke, Heidemarie, Dr.
Stadtplatz 7
A-4400 Steyr (AT)

EP 0 118 593 B1

Jouve, 18, rue St-Denis, 75001 Paris, France

## Beschreibung

Die Erfindung betrifft eine Teilezuführeinrichtung, insbesondere für Montage- bzw. Verpackungsmaschinen, mit einem Vorratsbunker für diese Teile, einer Fördervorrichtung sowie einer dieser nachgeordnete Orientiervorrichtung, der eine mit einem Antrieb verbundene Verteilvorrichtung zugeordnet ist, und deren Antrieb mit einer Steuervorrichtung wirkverbunden ist.

Es ist bereits eine Teilezuführeinrichtung bekannt — DE-OS 30 33 686 — die einen Vorratsbunker für diese Teile, eine Fördervorrichtung sowie eine dieser nachgeordnete Orientiervorrichtung aufweist. Im Förderweg der vororientierten Teile ist eine Feststelleinrichtung zum Ermitteln der Lage bzw. der Stellung der Teile angeordnet. In Abhängigkeit von der mit der Feststelleinrichtung ermittelten Lage eines Teiles wird dieser unter Verwendung einer Lageveränderungseinrichtung in eine vorbestimmte Soll-Lage gebracht. Die in der Soll-Lage befindlichen Teile werden einer Montageeinrichtung zugeführt. Der Zeitaufwand, den die Lageveränderungseinrichtung benötigt, um die in verschiedender Lage ankommenden Teile in ihre gewünschte Soll-Lage zu bringen, begrenzt die Ausstoßleistung dieser Teilezuführeinrichtung. Bei höheren Stückzahlen sind meist mehrere, parallel zueinander angeordnete Teilezuführeinrichtungen vorzusehen, um die notwendige Teilestückzahl für eine Montage- bzw. Verpackungsmaschine zur Verfügung stellen zu können.

Eine weitere bekannte Teilezuführeinrichtung — gemäß US-A-3,710,922 — weist eine im Verlauf der Förderbahn angeordnete Auswurfvorrichtung auf. Diese Auswurfvorrichtung ist scheibenförmig ausgebildet und um eine parallel zur Förderrichtung der Fördervorrichtung verlaufende Achse verdrehbar. In dieser scheibenförmigen Auswurfvorrichtung sind Durchlässe angeordnet, die mit der Fördervorrichtung fluchten. Der Durchlaß ist in Förderrichtung durch einen Kaliber begrenzt, welchen nur Teile passieren können, die sich in einer vorbestimmten definierten Lage befinden. Desweiteren ist im Bereich der Durchlässe eine Lageerkennungsvorrichtung angeordnet. Kann nun ein Teil, der sich nicht in der richtigen Lage befindet, das Kaliber nicht passieren, so werden die gegen den Teil gerichteten Lichtstrahlen der Lageerkennungsvorrichtung in einer vorbestimmten Art abgelenkt, wodurch eine Steuervorrichtung aktiviert wird, die einen Antrieb der scheibenförmigen Auswurfvorrichtung in Gang setzt. Durch die Rotation der scheibenförmigen Auswurfvorrichtung wird der falsch liegende Teil durch die Ausnehmung in der Auswurfvorrichtung mitgenommen und in einen neben der Fördervorrichtung befindlichen Behälter abgeworfen. Bei dieser bekannten Vorrichtung ist es demnach wie bei jenen Vorrichtungen, bei welchen die Lage der Teile mechanisch überprüft wird, zum Beispiel durch Balancierstege und dgl. nur möglich, falsch liegende Teile auszuscheiden. Dadurch können einer der Auswurfvorrichtung nachgeordneten Entnahmestelle nur so viel richtig liegende Teile zugeführt werden, wie mit der Fördervorrichtung richtig liegende Teile in den Bereich der Auswurfvorrichtung verbracht werden.

Der vorliegenden Erfindung liegt die Aufgabe zugrunde, eine Teilezuführeinrichtung zu schaffen, bei der die Kapazität jedes Förderweges zum Antransport der Teile und zum Ausrichten derselben in eine vorbestimmte Soll-Lage voll genutzt werden kann. Darüberhinaus soll die Orientierung von Teilen mit mehreren Ordnungsgraden möglichst ohne Unterbrechung der Teilezufuhr im Verlauf des Förderweges erfolgen.

Diese Aufgabe der Erfindung wird dadurch gelöst, daß die zwischen der Fördervorrichtung und zwei parallel zueinander verlaufende Förderwegen zur Lageorientierung der Teile angeordnete Verteilvorrichtung mit unterschiedlichen Förderwegen zusammenwirkende Ausgabestellungen eine insbesondere um eine parallel zum Förderweg ausgerichtete Achse drehbare Wippe aufweist und die Steuervorrichtung die Wippe in Abhängigkeit von, mit einer Überwachungsvorrichtung ermittelten Kenndaten der Förderung und/oder der Teile in die verschiedenen Ausgabestellungen verstellt und daß die Überwachungsvorrichtung ein zeit- und/oder mengenabhängig beaufschlagbares Meßorgan umfaßt. Durch diese überraschend einfach scheinende Lösung wird erreicht, daß die einzelnen Förderwege jeweils bis zu ihrer Maximalkapazität ausgelastet werden können und dabei die Kenndaten der Förderung und bzw. oder der Teile zur Vollauslastung der einzelnen Förderwege mitberücksichtigt werden. Dadurch wird sichergestellt, daß nur Teile, die den gewünschten Kenndaten der Teile und bzw. oder der Förderung entsprechen, zur Verarbeitungsstelle gelangen und die Pufferstrecken vor der Entnahmestelle durch den Kenndaten nicht entsprechende Teile nicht blockiert sind. Darüberhinaus wird eine möglichst gleiche Auslastung von parallel zueinander verlaufenden Förderwegen, die von einer Fördervorrichtung beschickt sind, sichergestellt.

Erfindungsgemäß können der den Förderwegen vorgeordneten Verteilvorrichtung zwei spiegelbildlich zueinander angeordnete Fördervorrichtungen vorgeordnet sein, wodurch auch bei Auswurf der als nicht entsprechend erkannten Teile und deren Rückführung zu den Fördervorrichtungen eine hohe Stückzahl von richtig orientierten und den gewünschten Kenndaten entsprechenden Teilen an der Abgabestelle des Förderweges erhalten wird.

Erfindungsgemäß ist weiters auch vorgesehen, daß die Verteilvorrichtung zusätzlich eine Umlenkvorrichtung aufweist, die vorzugsweise durch einen, quer zu einem Förderweg verstellbaren Schieber, einer die Außenabmessungen eines Teiles festlegenden Überwachungsvorrichtung, z. B. ein Kaliber, gebildet ist. Durch diese Ausbildung wird in einfacher Weise erreicht, daß ohne Anordnung eines zusätzlichen Handhabungs- bzw. Manipuliergerätes unrichtig orientierte Teile bzw. Teile mit nicht entsprechenden Kennwerten durch das Überwachungsorgan selbst auf einen anderen Förderweg verbracht werden können.

Von Vorteil ist eine Ausführungsform, bei der die Verteilvorrichtung zusätzlich eine Umlenkvorrichtung, z. B. einen Auswerfer für die Teile umfaßt und daß die, der Steuervorrichtung zugeordnete Überwachungsvorrichtung durch eine Lageerkennungsvorrichtung, z. B. eine Fernsehkamera, gebildet ist, wobei der Umlenkvorrichtung unterschiedliche Förderwege zugeordnet sind und bei einem Abweichen von dem die Soll-Lage des Teiles charakterisierenden Ausgangssignal aus der Überwachungsvorrichtung zu Übergabe des Teiles auf einen der weiteren Förderwege verstellbar ist, von welchen zumindest einer mit dem Vorratsbunker der Fördervorrichtung verbunden ist, da nicht richtig orientierte Teile sofort einem gesonderten Förderweg zugeführt werden können und somit der Hauptförderweg durch Manipulationen zur Korrektur der Lage der Teile nicht blockiert ist.

Weiters ist es nach der Erfindung auch möglich, daß der Steuervorrichtung mehrere Ist-Lage-Geber für verschiedene Lagen der Teile zugeordnet sind, und daß an Eingängen von Vergleichern die Ausgänge der Lageerkennungsvorrichtung und der Ist-Lage-Geber anliegen, wobei die Ausgänge der Vergleicher bei übereinstimmenden Eingangssignalen belegt und mit den, den Antrieben zugeordneten Steuerorganen oder einer Speichervorrichtung, z. B. einem zum Festhalten der die Lage der Teile kennzeichnenden Daten geeigneten Schieberegister verbunden sind. Dadurch ist es möglich, bei komplizierten Teilen, die mehrere Ordnungsgrade aufweisen, rasch zu entscheiden, ob sich der Teil in einer für eine nachfolgende Ausrichtung, z. B. mittels mechanischer Schikanen oder dgl., geeigneten Lage befindet oder ob durch die Vielzahl der noch nicht erfüllten Ordnungsgrade der Teil vom Förderweg entfernt werden soll. Dies gibt die Möglichkeit, unmittelbar anschließend an die Fördervorrichtung mit einer einfachen Schikanenplatte, beispielsweise einer ebenen Platte mit einem einfachen Anschlag auszukommen, auf der eine Vielzahl der angelieferten Teile aufgrund ihrer Ausbildung eine eigenstabile Lage einnehmen. Durch die Verwendung der Lageerkennungsvorrichtung kann dann der bereits erreichte Ordnungsgrad bei den Teilen erkannt werden. Durch diese differenzierte Feststellung der Lage der Teile ist es möglich, jeden Teil mittels der Verteilvorrichtung und des Antriebes nur jenen nachfolgenden Ausrichtvorrichtungen, wie z. B. Balancierstegen, Umlenkschikanen bzw. Wendeschikanen oder dgl., zuzuführen, die benötigt werden, um diesen Teil in die gewünschte Soll-Lage zu verbringen. Es ist aber auch möglich, Teile die noch einen sehr geringen Ordnungsrad aufweisen, ohne weitere Ausrichtung auszuschneiden und dem Vorratsbunker wieder zuzuführen. Damit kann die Ausstoßleistung des Förderweges optimal genutzt werden und es ist eine einfache Umrüstung dieser Teilezuführeinrichtung für andere Teile bzw. Teile unterschiedlicher Typen möglich. Werden die Ausgangssignale der Vergleicher einer Speichervorrichtung zum Festhalten der die Ist-Lage der Teile kennzeichnenden Daten zugeführt, so kann in überraschend einfacher Weise eine nachgeschaltete Handhabungsvorrichtung, beispielsweise ein Roboter oder ein Manipulator, den Teil während des Transportes von der Entnahmestelle der Teilezuführeinrichtung beispielsweise zu einer Montage- bzw. Verpackungsmaschine noch bezüglich der fehlenden Ordnungsgrade ausrichten. Von Vorteil ist es hierbei, wenn die Speichervorrichtung ein Schieberegister aufweist, bzw. mehrere Speicherplätze für die Ist-Lage von aufeinanderfolgend angelieferten Teilen, sodaß vor der Handhabungsvorrichtung bzw. dem Manipulator jeweils mehrere Teile vorrätig gehalten werden können. Diese Pufferstrecke bzw. diese Teilespeicherung zwischen der Lageerkennungsvorrichtung und der Handhabungsvorrichtung bringt den Vorteil, daß auch bei Anfall einer größeren Anzahl von nicht richtig orientierten Teilen die Taktzeit bei der Entnahme von Teilen mittels der Handhabungsvorrichtung eingehalten werden kann.

Vorteilhaft ist es weiters, wenn der Ausgang der Speichervorrichtung bzw. der Lageerkennungsvorrichtung an einer Steuereinheit einer Handhabungsvorrichtung angeschlossen ist, deren Bewegungsablauf zwischen der Aufnahme und der Ablage des Teiles in Abhängigkeit von den Ist-Lage Daten der Speichervorrichtung bzw. der Lageerkennungsvorrichtung gesteuert ist, da dadurch ortsfeste Ausrichtvorrichtungen entlang des Förderweges eingespart und mit einem geringeren Platzbedarf für die Orientierungsvorrichtung das Auslangen gefunden werden kann.

Im Rahmen der Erfindung ist es weiters aber auch möglich, daß die Kapazität der Speichervorrichtung auf die maximale Speicherkapazität von Teilen zwischen der Lageerkennungsvorrichtung und der Entnahmestelle der Handhabungsvorrichtung abgestimmt ist, wodurch in jedem Fall sichergestellt ist, daß bei der Entnahme eines Teiles im Bereich der Entnahmestelle mittels der Handhabungsvorrichtung, das diesem Teil zugeordnete Ist-Lage Signal der Steuereinheit der Handhabungsvorrichtung zugeführt werden kann.

Von Vorteil ist es weiters, wenn die den Ausgängen der Vergleicher nachgeschalteten Antriebe der Verteil- bzw. Umlenkvorrichtungen unterschiedlichen Förderwegen zugeordnet sind und zumindest ein Förderweg mit dem Vorratsbunker der Fördervorrichtung verbunden ist. Durch die Auswahl der Förderwege, welchen die einzelnen Teile zugeführt werden, ist es möglich, nur jene Teile einer weiteren Ausrichtung zu unterziehen, die noch nicht den gewünschten Ordnungsgrad aufweisen. Die zufällig bei der ersten Groborientierung bereits die richtige Lage aufweisenden Teile können ungehindert und unmittelbar der Entnahmestelle des Förderweges zugeführt werden. Damit kann die Ausstoßleistung der erfindungsgemäßen Teilezuführeinrichtungen mit Vorteil erhöht werden.

Es ist weiters aber auch möglich, daß die der Verteilvorrichtung, insbesondere nachgeordneten Förderwege mit den Teilen zugeordneten Führungsteilen, insbesondere Schikanenplatten, Schikanen, Umlenker, Kaliber oder dgl., aus Kunststoff, z. B. PVC, versehen sind und daß gegebenenfalls die Schikanenplatte mit den Anschlägen, Umlenkern oder dgl., über einen Kleber verbunden ist. Hierbei ist vorteilhaft, daß die erfindungsgemäßen Vorteile auch bei sehr heiklen Teilen, beispielsweise mit Edelmetall beschichteten Kontakten und dgl., erreicht werden können, ohne daß eine Beschädigung der Teile während der Zuführung befürchtet werden muß. Darüberhinaus werden durch den Einsatz von Kunststoffen vielfach höhere Standzeiten und ein besseres Vibrations- und Gleitverhalten der Teile erreicht. Überdies schafft die Verwendung von Führungsteilen aus Kunststoff die Möglichkeit, die auf eine Schikanenplatte aufzubringenden Abweiser, Ausrichtungsorgane und dgl., einfach durch einen Klebevorgang aufzubringen. Dies ermöglicht vor allem eine Zeitersparnis bei der Herstellung von Schikanen. Dies wirkt sich vor allem bei der Erstellung von Schikanen für neue Teile, für welche noch keine Zuführeinrichtungen vorliegen, vorteilhaft aus, da erst nach Festliegen der gewünschten Schikanenform bzw. Form der benötigten Ablenker, Abweiser oder Kaliber diese in Metall gefertigt werden müssen bzw. die Konstruktionszeichnungen anhand des aus Kunststoff vorgefertigten Musters erarbeitet werden können.

Schließlich umfaßt die Erfindung auch ein Verfahren zum Orientieren und gegebenenfalls zum Vereinzeln von Teilen, insbesondere an Montage- bzw. Verpackungsmaschinen, bei welchen von einer in einem Vorratsbunker gelagerten ungeordneten Menge dieser Teile, eine Teilmenge entnommen und einem nachgeordnetem Förderweg zugeführt werden, entlang welchem sich in einer bestimmten unrichtigen Lage befindliche Teile ausgeschieden und die anderen Teile zu einer Entnahmestelle verbracht und in dieser ausgerichtet werden.

Dieses Verfahren ist dadurch gekennzeichnet, daß eine Anzahl von Teilen, die jeweils einem von zwei Förderwegen zugeführt wird durch voreinstellbare Zeitabstände oder die Anzahl der Teile, die dem jeweiligen Förderweg zugeführt werden und/oder in Abhängigkeit von einem Füllstand, insbesondere dem Minimumfüllstand einer Pufferstrecke festgelegt wird.

Die Vorteile dieses Verfahrens liegen darin, daß die vom Vorratsbunker zugeführten Teile möglichst gleichmäßig auf die nachgeordneten Förderwege aufgeteilt werden, sodaß keiner der nachgeordneten Förderwege mit zu orientierenden Teilen überfüllt wird und andererseits die Orientier- und Ausrichtvorrichtungen jedes einzelnen Förderweges möglichst vollständig genutzt werden.

Nach einer weiteren Variante des erfindungsgemäßen Verfahrens ist vorgesehen, daß vorerst immer jenem Förderweg, in welchem die Anzahl der Teile einen Minimumfüllstand unterschritten hat, und danach jenem Förderweg, bei welchem die Pufferstrecke nicht vollständig mit Teilen gefüllt ist, Teile zugeführt werden, wodurch neben einer gleichmäßigen Auslastung der Förderwege auch immer sichergestellt ist, daß in jedem der beiden Förderwege eine ausreichende Reserve an richtig orientierten Teilen vorhanden ist, sodaß eine an den Förderweg anschließende Maschine nicht durch das Fehlen von richtig orientierten Teilen blockiert ist.

Zum besseren Verständnis der Erfindung wird diese anhand der in den Zeichnungen dargestellten Ausführungsbeispiele näher erläutert:

Es zeigen

Fig. 1 eine Teilezuführeinrichtung, die einer Montagemaschine zugeordnet ist, in schaubildlicher Darstellung;

Fig. 2 einen Teil der Teilezuführeinrichtung gemäß Figur 1 in Stirnansicht, geschnitten gemäß den Linien II-II in Figur 1;

Fig. 3 eine erfindungsgemäße Verteilvorrichtung einer Teilezuführeinrichtung;

Fig. 4 einen Förderweg in Stirnansicht, teilweise geschnitten, mit einer diesem zugeordneten Verteilvorrichtung;

Fig. 5 einen Förderweg in Stirnansicht, teilweise geschnitten, mit aus Kunststoff bestehenden Führungsteilen;

Fig. 6 eine Stirnansicht einer erfindungsgemäßen Verteilvorrichtung zwischen zwei spiegelbildlich angeordneten Fördervorrichtungen einer Teilezuführungseinrichtung;

Fig. 7 eine weitere Ausbildung einer Teilezuführeinrichtung;

Fig. 8 die Teilezuführeinrichtung gemäß Figur 7 mit einer abgeänderten Verteil- und Steuervorrichtung zur Mitverwendung einer Handhabungsvorrichtung zum Verbringen der Teile in die gewünschte Soll-Lage.

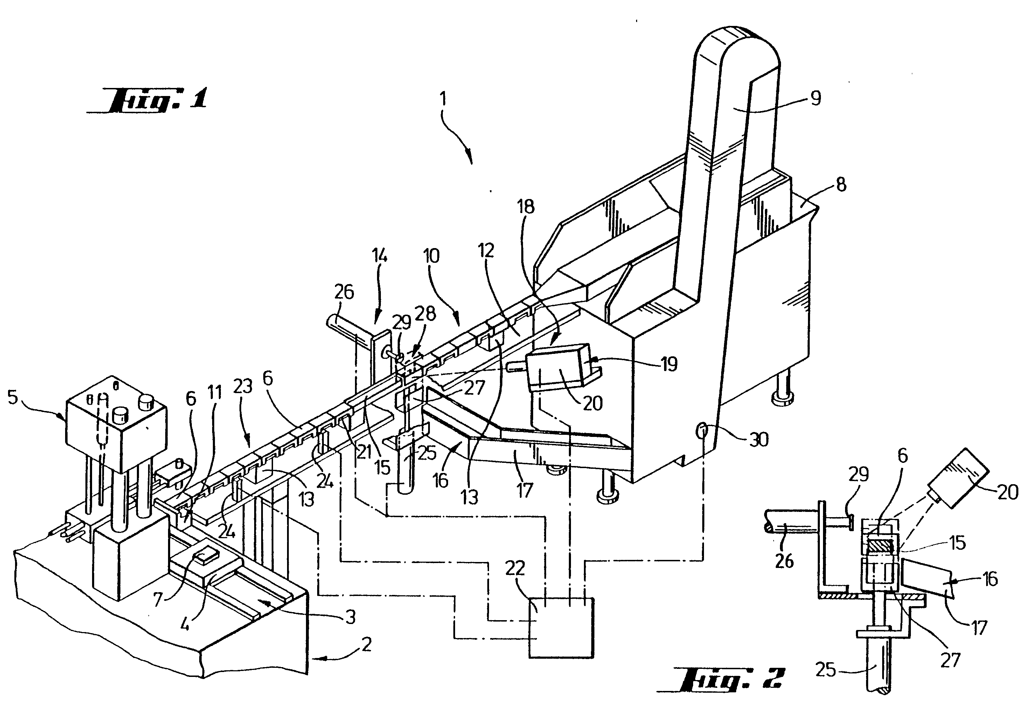

In Fig. 1 ist eine Teilezuführeinrichtung 1 dargestellt, die einer Montagemaschine 2 zugeordnet ist. Auf einer Führungsbahn 3 dieser Montagevorrichtung 2 sind Werkstückträger 4 verfahrbar angeordnet. Im Bereich einer Handhabungsvorrichtung 5 werden die Werkstückträger 4 angehalten, um einen mit der Teilezuführeinrichtung 1 herantransportierten Teil 6 auf einem, am Werkstückträger 4 liegenden Werkstück 7 zu montieren. Die Teilezuführeinrichtung 1 umfaßt einen Vorratsbunker 8, eine Fördervorrichtung 9 sowie eine dieser nachgeordnete Orientiervorrichtung 10 und eine Vereinzelungsvorrichtung 11.

Im Verlauf der Orientiervorrichtung 10, die einen Linearförderer 12 umfaßt, wie er auch für die beiden an die erfindungsgemäße Verteilvorrichtung anschließenden Förderwege verwendet werden könnte, der über Vibrationsantriebe 13 in Schwingungen versetzt wird, ist eine erfindungsgemäße Verteilvorrichtung 14 angeordnet. Ein Förderweg 15 wird durch eine, die Teile 6 aufnehmende Führungsleiste des Linearförderers 12 und ein weiterer Förderweg 16 durch eine Rutsche 17, die mit dem Vorratsbunker 8 der Fördervorrichtung 9 verbunden ist, gebildet.

Der Verteilvorrichtung 14 ist eine Überwachungseinrichtung 18, die durch eine Lagererkennungsvorrichtung 19, nämlich eine Fernsehkamera 20, gebildet ist, zugeordnet. Die der Vereinzelungsvorrichtung 11 am Ende des Linearförderers 12 zugeführten Teile 6 müssen eine vorbestimmte Soll-Lage aufweisen, bei der ein Schlitz 21 der Fernsehkamera 20 zugewendet ist. Zur Feststellung, ob nun jeder Teil 6 die der Soll-Lage entsprechende Orientierung aufweist, wird jeder Teil im Bereich der Verteilvorrichtung 14 mittels der Fernsehkamera 20 abgetastet. Je nach der Lage des Teiles 6 werden unterschiedliche Ausgangssignale von der Fernsehkamera 20 an eine Steuervorrichtung 22 übermittelt. Entspricht die Stellung des Teiles 6 der gewünschten Orientierung, bei der der Schlitz 21 der Fernsehkamera 20 zugeordnet ist, so kann der Teil 6 ohne Behinderung der Verteilvorrichtung 14 passieren und wird einer — im Zuge des Linearförderers 12 angeordneten — Pufferstrecke 23 zugeführt. Diese ist durch zwei Füllstandsmelder 24, die einen Minimum- und Maximumfüllstand anzeigen, begrenzt. Die Ausgangssignale der Füllstandsmelder 24 werden der Steuervorrichtung 22 zugeführt. Weist ein Teil 6, wie jener, der sich in der Zeichnung im Aufnahmebereich der Fernsehkamera 20 befindet, eine falsche Orientierung auf, so wird anhand des von der Fernsehkamera 20 an die Steuervorrichtung 22 übermittelten Signales die Abweichung von der Soll-Lage festgestellt. Über die Steuervorrichtung 22 werden dann ein Antrieb 25 und ein Antrieb 26 aktiviert. Mit dem Antrieb 25 wird eine Umlenkvorrichtung 27 der Verteilvorrichtung 14 in eine mit strichlierten Linien dargestellte und dem Förderweg 16 zugeordnete Ausgabestellung 28 verstellt. Danach wird der Antrieb 26 eines Auswerfers 29 der Verteilvorrichtung 14 aktiviert.

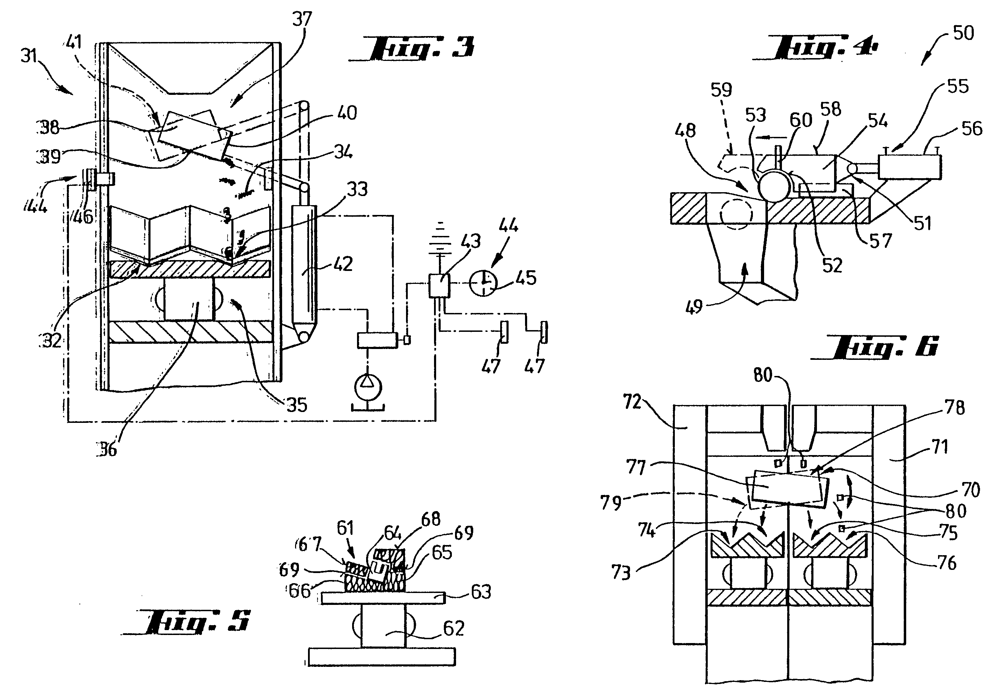

Wie besser in Figur 2 ersichtlich, wird der unrichtig orientierte Teil 6 mit der Umlenkvorrichtung 27 von der Förderleiste des Förderweges 15 abgehoben, sodaß er mit dem Auswerfer 29 durch Betätigung des Antriebes 26 in den Förderweg 16, nämlich die Rutsche 17, abgeworfen werden kann. Der Teil 6 rutscht dann zurück in den Vorratsbehälter 8 im Bereich der Fördervorrichtung 9. Die nicht orientierten Teile 6 werden daher, ohne die Zufuhr der weiteren von der Orientiervorrichtung 10 kommenden Teile zu behindern, ausgeworfen und durch einen neuen Zuführvorgang über die Vorrichtung 9 und einen neuen Orientiervorgang im Bereich der Orientiervorrichtung 10 in die gewünschte Orientierung verbracht.

Der Vorteil dieser Anordnung liegt darin, daß mittels der Fernsehkamera 20 nur zwischen in der Soll-Lage und nicht in der Soll-Lage befindlichen Teilen zu unterscheiden ist, wobei dies mit der Fernsehkamera 20 für kompliziert geformte Teile mit hoher Sicherheit und sehr rasch bzw. ohne großen technischen Aufwand möglich ist, während Behinderungen der Zufuhr der Teile 6 durch ein im Bereich des Förderweges 15 erfolgendes Ausrichten der Teile in die richtige Stellung wegfällt.

Die Umlenkvorrichtung 27 kann darüberhinaus aber auch für den Fall, daß die Pufferstrecke 23 mit Teilen 6 gefüllt ist und ein dementsprechendes Signal vom Füllstandsmelder 24 an die Steuervorrichtung 22 abgegeben wird zur Ableitung der von der Orientiervorrichtung 10 kommenden Teile zurück in den Vorratsbehälter 8 verwendet werden, um einen Rückstau der Teile 6 bis in den Bereich der Fördervorrichtung 9 zu vermeiden. Gleichermaßen ist es selbstverständlich möglich, mit dem den Maximumfüllstand anzeigenden Füllstandmeßwertgeber 24 über die Steuervorrichtung 22 einen Antriebsmotor 30 der Fördervorrichtung 9 ein- und auszuschalten. Gleichermaßen kann der Förderweg 15 auch aus mehreren unabhängig voneinander schaltbaren, hintereinander liegenden Vibrationsförderern gebildet sein, um beispielsweise bei völlig gefüllter Pufferstrecke 22 die vorgeschaltete Orientiervorrichtung 10 abschalten zu können. Anstelle der Fernsehkamera 20 ist es selbstverständlich auch möglich, entsprechende andere elektrooptische Einrichtungen, z. B. Zeilenkameras oder dgl., zu verwenden, um die äußere Form bzw. die Lage des zu prüfenden Teiles erfassen zu können.

In Figur 3 ist eine erfindungsgemäß ausgebildete Teilezuführeinrichtung 31 gezeigt, die zwei parallel zueinander verlaufende Förderwege 32, 33 für zu orientierende Teile 34 aufweist. Die Förderwege 32, 33 sind zum Teil auf einem Linearförderer 35 angeordnet, der über einen Vibrator 36 in Schwingungen versetzt werden kann. Um eine entsprechende gesicherte Zufuhr einer bestimmten Anzahl von Teilen 34 auf jedem der beiden Förderwege 32, 33 sicherzustellen, ist den beiden Förderwegen eine Verteilvorrichtung 37 vorgeordnet. Diese besteht aus einer drehbar gelagerten Wippe 38, die um eine parallel zu den Förderwegen 32, 33 ausgerichtete Achse 39 verschwenkbar ist. Zum Verschwenken der Wippe 38 aus der in vollen Linien gezeichneten Ausgabestellung 40 in die mit strichlierten Linien dargestellte Ausgabestellung 41 ist ein Antrieb 42, z. B. eine pneumatisch beaufschlagbare Zylinderkolbenanordnung, über ein Gestänge mit der Wippe 38 verbunden. Die Verstellung der Wippe 38 mittels des Antriebes 42 aus der Ausgabestellung 40 in die Ausgabestellung 41 wird über eine Steuervorrichtung 43 bewirkt, die in Abhängigkeit von einer Überwachungsvorrichtung 44 aktiviert wird. Diese Aktivierung kann z. B. durch jene Überwachungsvorrichtung 44 ausgelöst werden, die durch ein Meßorgan 45 gebildet ist, welches in voreinstellbaren Zeitabständen ein Signal an die Steuervorrichtung 43 abgibt. Die Steuervorrichtung 43 kann aber auch durch ein Meßorgan 46, welches in Abhängigkeit von der Anzahl der Teile 34, die von der Wippe 38 dem Förderweg 32, 33 zugeführt werden, beaufschlagt bzw. aktiviert werden. Darüberhinaus kann die Steuervorrichtung 43 über das schematisch angedeutete Ventil der Druckluftversorgungseinheit, den Antrieb 42 auch in Abhängigkeit von den Ausgangssignalen von Füllstandsmeßwertgebern 47 einer Pufferstrecke beaufschlagt werden, sodaß selbsttätig immer jenem Förderweg 32, 33 Teile 34 zugeführt werden, dessen Pufferstrecke noch nicht vollständig gefüllt ist bzw. vor allem jener, deren Minimumfüllstand unterschritten ist.

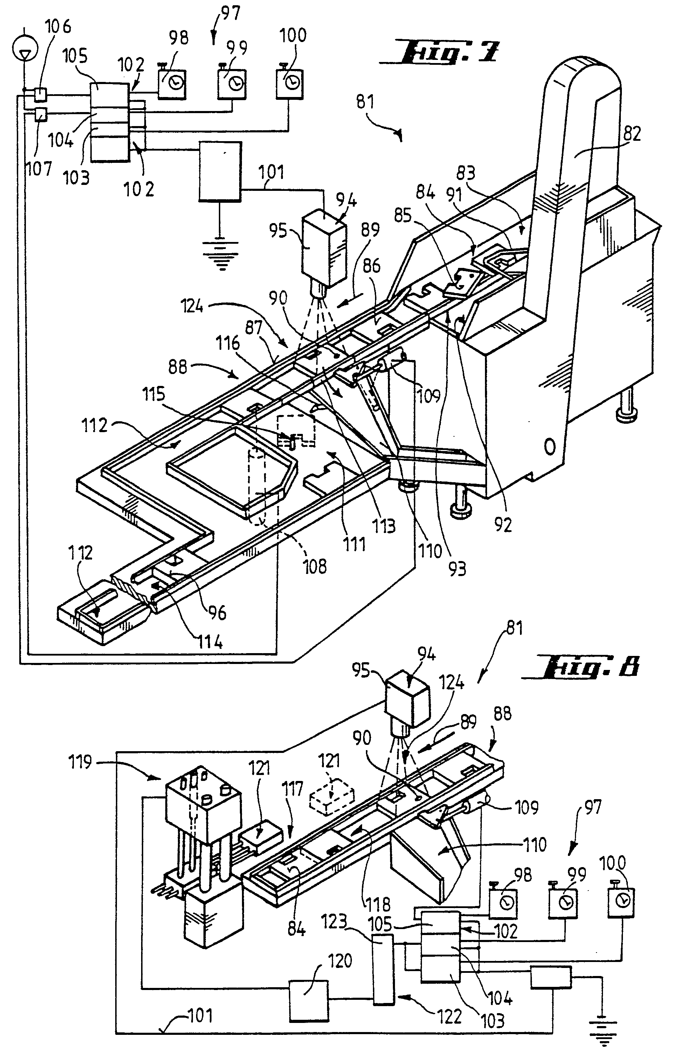

In Figur 4 ist ein Förderweg 48 und ein Förderweg 49 gezeigt. Im Bereich diesere beiden Förderwege 48, 49 ist eine zusätzliche Verteilvorrichtung 50 vorgesehen. Dieser Verteilvorrichtung ist eine Überwachungsvorrichtung 51 zugeordnet, die durch ein Kaliber 52 zum Prüfen der Außenabmessungen eines Teiles 53 gebildet ist. Das Kaliber 52 ist auf einem Schieber 54 einer Umlenkvorrichtung 55 angeordnet. Der Schieber 54 ist mit einem Antrieb 56 gekuppelt, mit welchem er entlang einer Führungsbahn 57 quer zum Förderweg 48 aus einer Ausgabestellung 58 in eine Ausgabestellung 59 verstellbar ist. Je nach Stellung des Schiebers 54 können die Teile 53 am Förderweg 48 entlangwandern bzw. werden dem Förderweg 49 zugeführt. Im Bereich der den Teilen 53 zugewandten Kaliberfläche des Kalibers 52 ist ein Fühler 60 angeordnet. Mit diesem Fühler 60 kann entweder festgestellt werden, daß ein Teil 53 mit einer zu großen Außenabmessung im Kaliber 52 festgeklemmt ist — der Fühler 60 gibt dann z. B. ein Dauersignal ab — oder es kann festgestellt werden, daß über längere Zeit kein Teil 53 den Fühler 60 passiert hat, sodaß anzunehmen ist, daß sich ein Teil 53 mit zu großer Außenabmessung im Einlauf des Kalibers 52 verklemmt hat. In beiden Fällen wird über die Steuervorrichtung 22 der Antrieb 56 beispielsweise mit Druckluft beaufschlagt und der Schieber 54 in die mit strichlierten Linien gezeichnete Ausgabestellung 59 verschoben, sodaß Teile 53 mit unrichtigen Außenabmessungen dem Förderweg 49 zugeführt werden und nur Teile mit richtigen Außenabmessungen ungehindert entlang des Förderweges 48 das Kaliber 52 passieren können.

In Figur 5 ist ein Förderweg 61 gezeigt, der beispielsweise durch einen, über Vibratoren 62 in Schwingungen versetzbaren Linearförderer 63 gebildet ist. Die den zu orientierenden Teilen 64 zugeordneten Führungsteile 65, 66 bestehen im dargestellten Ausführungsbeispiel aus Kunststoff. Als Basismaterial kann hierbei PVC in Plattenform Verwendung finden. Andererseits ist es aber auch möglich, sie aus geschäumten Kunststoff herzustellen. Hierbei erweist es sich als vorteilhaft, wenn die Führungsteile 65, 66 in einem gemeinsamen Schäumvorgang mit der Tragplatte hergestellt werden. Damit kann die Lärmentwicklung im Bereich der Linearförderer verringert werden bzw. sind die Kunststoffteile relativ einfach zu bearbeiten, um eine gewünschte Formgebung zu erzielen. Insbesondere ist es hierbei vorteilhaft, wenn für die Führungsteile bzw. die Schikanenplatten Polyurethan-Hartintegralschaumstoff zur Herstellung verwendet wird. Beim Schäumen des Polyurethan-Hartintegralschaumstoff entsteht eine harte tragende Oberschicht, die gegen Verschleiß widerstandsfähig ist und in Verbindung mit dem weniger dichten Kern ein Sandwichelement bildet.

Ein weiterer Vorteil der Verwendung von Kunststoffen für Schikanenplatten und deren Zubehör liegt in der einfachen Bearbeitung und Verbindungsmöglichkeit der Schikanenplatte mit darauf angeordneten Teilen. So ist es bei der Auslegung von Schikanen für Teile, für welche noch keine Schikanenplatten vorliegen, vorteilhaft, Anschläge 67 bzw. Umlenker 68 für die Teile 64 mittels Kleber 69 mit den Führungsteilen 65 bzw. 66, beispielsweise einer Schikanenplatte oder dgl., zu verbinden. Stellt sich im Zuge der weiteren Versuche heraus, daß die Ausbildung des Anschlages 67 bzw. des Umlenkers 68 nicht den Vorstellungen entspricht, können diese einfach von der Schikanenplatte bzw. den Führungsteilen abgebrochen und durch einen weiteren Klebevorgang in einer anderen Stellung, beispielsweise nach einer vorhergehenden Bearbeitung, aufgeklebt werden.

In Figur 6 ist eine Ausführungsform der erfindungsgemäßen Teilezuführeinrichtung gezeigt, bei der einer Verteilvorrichtung 70 zwei Fördervorrichtungen 71, 72 vorgeordnet sind. Die beiden Fördervorrichtungen 71, 72 sind spiegelbildlich zueinander angeordnet. Der Verteilvorrichtung 70 sind vier Förderwege 73, 74, 75, 76 nachgeordnet, wobei eine die Verteilvorrichtung 70 bildende Wippe 77 zwischen der in vollen Linien gezeichneten Ausgabestellung 78 und der in strichlierten Linien dargestellten Ausgabestellung 79, vorzugsweise kontinuierlich, verstellbar ist. Dies gewährleistet ein gleichmäßiges Beschicken der Förderwege 73 bis 76 mit Teilen 80 aus beiden Fördervorrichtungen 68, 69. Selbstverständlich ist es im Rahmen der Erfindung aber auch möglich, der Wippe 77 verschiedene Ausgabestellungen zuzuordnen, wobei in jeder Ausgabestellung der Wippe 77 einer der vier Förderwege 73 bis 76 zugeordnet ist. Die Verstellung der Wippe 77 zwischen den einzelnen Ausgabestellungen kann jeweils wieder in Abhängigkeit von der Teilmenge, die dem einzelnen Förderweg zugeführt wird bzw. in Abhängigkeit von einem voreinstellbaren Zeitintervall erfolgen.

In Figur 7 ist eine Teilezuführeinrichtung 81 gezeigt, die eine Fördervorrichtung 82, insbesondere einen Linearförderer, wie er z. B. in unserer DE-OS 31 35 581 beschrieben ist, aufweist. Dem Auswurfbereich der Fördervorrichtung 82 ist eine Vororientierungsschikane 83 zugeordnet. Diese Vororientierungsschikane 83 ist derart ausgerichtet, daß Teile 84 ihre aufgrund der Ausbildung gegebene eigenstabile Lage einnehmen und somit mit einer der beiden Seitenflächen 85 bzw. 86 auf einer Schikanenplatte 87 eines Linearförderers 88 aufliegen. Der Linearförderer 88 kann mittels Schwingmagneten oder ähnlicher Antriebe in Vibrationen versetzt werden, um einen Längstransport der Teile 84 in Richtung des Pfeiles 89 zu erreichen. Der Seitenfläche 85 ist gegenüber der Seitenfläche 86 eine Bohrung 90 zugeordnet. Im Bereich der Vororientierungsschikane 83 ist ein Ablenker 91 vorgesehen, der auf der, der Schikanenplatte 87 gegenüberliegenden Seite ankommende Teile 84 auf die Schikanenplatte 87 umlenkt. Oberhalb eines Vorratsbehälters 92 ist im Zuge des Linearförderers 88 ein Ausscheider 93 angeordnet, mit dem, wie schematisch gezeigt, übereinanderliegende Teile 84 in den Vorratsbunker 93 abgelenkt werden. Dies erfolgt derart, daß die Teile 84 über einen Balanciersteg geführt werden, dessen Höhe relativ zur Schikanenplatte 87 in etwa der Dicke der Teile 84 entspricht, sodaß darüberliegende Teile in den Vorratsbunker abrutschen. Bei Teilen, die ineinander hängen können, können überdies Kaliber bzw. zusätzliche Abweiser installiert werden, die verhindern, daß noch in sich verhängte Teile den Bereich der Vororientierungsschikane 83 passieren können. Im Anschluß daran gelangen die Teile 84 im Zuge des Linearförderers 88 in den Bereich einer Lageerkennungsvorrichtung 94, z. B. einer Fernsehkamera 95, mit der die Ist-Lage der Teile 84 erfaßt wird. Wie aus dem, zum besseren Verständnis in vereinfachter Form dargestellten Ausführungsbeispiel zu entnehmen ist, kann die Ist-Lage der Teile 84 in bis zu zwei Ordnungsgraden von einer Soll-Lage 96 der Teile 84 abweichen. Für die drei möglichen Ist-Lagen der Teile 84 sind einer Steuervorrichtung 97 drei Ist-Lage-Geber 98, 99, 100 zugeordnet. Ein Ausgang 101 der Lageerkennungsvorrichtung 94 sowie jeweils der Ausgang eines Ist-Lage-Gebers 98 bis 100 ist an Eingängen 102 von Vergleichern 103 bis 105 angeschlossen. Die Ausgänge der Vergleicher 103 bis 105 sind an verschiedenen Steuerorganen 106, 107 für Antriebe 108, 109 angeschlossen. Diese Antriebe 108, 109 sind verschiedenen Förderwegen 110, 111 und 112 zugeordnet. Der Förderweg 110 erstreckt sich vom Bereich der Lageerkennungsvorrichtung 94 in den Vorratsbunker 92. Über den Antrieb 109 wird bei Feststellung der Ist-Lage eines Teiles 84 im Bereich der Lageerkennungsvorrichtung 94 über den Vergleicher 105 und das Steuerorgan 106 der Antrieb 109 beaufschlagt, wodurch eine Klappe 113 in eine Öffnungsstellung verschwenkt wird und der unrichtig liegende Teil 84 dem Förderweg 110 zugeführt wird.

Stimmt demgegenüber das Ausgangssignal der Lageerkennungsvorrichtung 94 mit dem Ist-Lage-Geber 99 überein, so gibt der Vergleicher 104 ein Signal an das Steuerorgan 107 ab, welches den Antrieb 108 mit Druckmittel beaufschlagt. Dadurch wird, wie gezeigt, ein Teil, dessen Ausnehmung nicht zur oberen Randleiste der Schikanenplatte 87 zeigt, in einen Förderweg 111 abgelenkt, der einen Bypaß zum Förderweg 112, der zu einer Pufferstrecke 114 führt, bildet. Befindet sich ein Teil 84 im Bereich der Lageerkennungsvorrichtung 94 bereits in der Soll-Lage 96, so kann zur zusätzlichen Überwachung dieser Lage ein weiterer Ist-Lage-Geber 100 vorgesehen sein. Über den Ausgang des Vergleichers 103 können dann beispielsweise Registriervorrichtungen oder dgl. beeinflußt werden. Im Bereich des Förderweges 111 ist eine Wendevorrichtung 115 gezeigt, mit der die Teile 84 in der horizontalen Ebene um eine vertikale Achse um 180° gedreht werden können. Zur Unterstützung der Drehbewegung kann im Bereich der Wendevorrichtung 115 eine Luftdüse 116 vorgesehen sein.

Der Vorteil einer derart ausgebildeten Teilezuführeinrichtung liegt vor allem darin, daß nur jene Teile 84 zu einer Entnahmestelle 117 weitergeleitet werden, die nur mehr hinsichtlich eines oder zwei Ordnungsgraden auszurichten sind. Würde deren Ausrichtung mehrere Manipulationsvorgänge erfordern, wäre die Zeitdauer größer als die gewünschte Taktzeit bei der Entnahme der Teile, deshalb werden diese Teile ausgeschieden und über den Förderweg 110 wieder dem Vorratsbunker zu einer neuen Zuführung zugeleitet.

In Figur 8 ist eine weitere Ausführungsvariante der Teilezuführeinrichtung 81 gezeigt, wobei gleiche Teile mit den gleichen Bezugszeichen versehen sind. Der Linearförderer 88 bildet in diesem Ausführungsbeispiel in dem, der Lageerkennungsvorrichtung 94 nachgeordneten Bereich einen Förderweg 118. Der Förderweg 110 entspricht demgemäß der Ausführungsform nach Figur 7. Wie ersichtlich, ist jedoch an der Entnahmestelle für die Teile 84 eine Handhabungsvorrichtung 119 angeordnet, die mit einer Steuereinheit 120 für die Bewegungen eines Greifers 121 verbunden ist. Während der Ausgang des Vergleichers 105 nach wie vor mit dem Antrieb 109 verbunden ist, sind die Ausgänge der Vergleicher 103, 104 mit einer Speichervorrichtung 122, nämlich einem Schieberegister 123, verbunden. Der Ausgang des Schieberegisters ist mit der Steuereinheit 120 wirkverbunden. Passiert nun ein Teil 84 den Bereich der Lageerkennungsvorrichtung 94, so wird bei einer, mit der Ist-Lage des Ist-Lage-Gebers 98 übereinstimmenden Stellung desselben der Teil 84 dem Förderweg 110 zugeführt. Im Falle, daß der Teil 84 die mit den beiden Ist-Lage-Gebern 99 und 100 festgelegten Ist-Lagen einnimmt, kann der Teil 84 ungehindert die Lageerkennungsvorrichtung passieren und wird dem Förderweg 118 zugeführt. Die beim Passieren der Lageerkennungsvorrichtung 94 ermittelten Ist-Signale werden über die zugehörigen Vergleicher unmittelbar dem Schieberegister 123 zugeführt, wobei das Schieberegister 123 zumindest soviele Speicherplätze aufweist, wie Teile 84 zwischen der Entnahmestelle 117 und der Lageerkennungsvorrichtung 94 Platz finden. Damit wird der Steuereinheit 120 der Handhabungsvorrichtung 119 jeweils für jeden Teil, der sich an der Entnahmestelle 117 befindet, dessen Lage exakt signalisiert. Es ist nunmehr möglich, durch, bei Vorliegen von entsprechenden Ist-Lage Kennwerten vorprogrammierte Bewegungsabläufe mit der Handhabungsvorrichtung den Teil 84 aufzunehmen, mittels der Handhabungsvorrichtung in die gewünschte Soll-Lage zu verbringen und abzulegen bzw. auf ein Werkstück zu montieren.

Der Vorteil dieser Lösung liegt darin, daß der Förderweg 118 als Pufferstrecke verwendet werden kann und auch bei mehreren unmittelbar hintereinander anfallenden völlig falsch liegenden Teilen, die dem Förderweg 110 zugeführt werden müssen, eine nahtlose Versorgung der Handhabungsvorrichtung bzw. einer nachgeordneten Montage- bzw. Verpackungsmaschine mit Teilen 84 gewährleistet ist.

Überdies kann die Vielfältigkeit der Bewegungsmöglichkeiten eines derartigen Handhabungsgerätes zur Vereinfachung der Ausbildung der Schikanenplatten 87 bzw. dem Wegfall von ortsfest angeordneten Orientierungshilfen genutzt werden.

Ist es aufgrund der Taktzeit der nachgeschalteten Montage- bzw. Verpackungsmaschine möglich, mit größeren Zeitintervallen für den Antransport von richtig orientierten Teilen auszukommen, so kann die Handhabungsvorrichtung 119 — wie mit strichlierten Linien angedeutet — der Lageerkennungsvorrichtung 94 unmittelbar nachgeordnet sein. Durch die erfindungsgemäße Zuordnung des weiteren Förderweges 110 in Verbindung mit der Lageerkennungsvorrichtung 94 kann jedoch auch dort gegenüber den bisher bekannten Vorrichtungen eine Taktzeitersparnis erreicht werden.

Bei den Ausführungsbeispielen nach den Figuren 7 und 8 sind einer Verteilvorrichtung 124 Förderwege 110, 111, 112 bzw. 110 und 118 bzw. Antriebe 108, 109 oder 119 zugeordnet.

Wesentlich ist lediglich, daß der Verteilvorrichtung eine Überwachungsvorrichtung vorgeordnet ist, die die Lage der Teile erkennt und in Abhängigkeit von der festgestellten Lage der Teile diesen von der weiteren Orientierung ausschließt, vorzugsweise einem Vorratsbunker einer Fördervorrichtung wieder zuführt, bzw. verschieden gestalteten nachgeordneten Orientiervorrichtungen zuleitet. Im Rahmen der Erfindung ist selbstverständlich auch die Ausbildung der Fördervorrichtung beliebig abwandelbar. So ist es bei Verarbeitung von sich verhängenden Teilen, beispielsweise Schraubenfedern oder dgl., möglich, im Bereich der Vororientierungsschikane 83 zwischen dem Ausscheider 93 und einem Vorratsbunker 92 eine Wirbelkammer anzuordnen, um Teile, die im Bereich der Vororientierungsschikane noch verwirrt sind bzw. zusammenhängen, voneinander zu lösen und erneut der Fördervorrichtung 82 zuzuführen.

Überdies ist es möglich, die Fördervorrichtung 82 durch ein, unterhalb einer metallischen Gleitfläche angeordnetes Magnetband bzw. ein mit Dauermagneten bestücktes Band zu bilden, sodaß die einzelnen Teile durch Magnetkraft aus dem Vorratsbunker entnommen und hochgefördert werden. In diesem Fall ist es vorteilhaft, wenn zwischen der Abwurfstelle der Fördervorrichtung und der Vororientierungsschikane 83 die Teile eine Entmagnetisierungsvorrichtung, beispielsweise eine kreisringförmige Wechselstromspule, passieren, sodaß der in den Teilen enthaltene Restmagnetismus entfernt wird und die Teile voneinander gelöst werden.

Darüberhinaus ist auch die Ausbildung der Überwachungsvorrichtung im Rahmen der Erfindung beliebig abwandelbar. So können anstelle der Fernsehkamera eine Zeilenkamera, ein Lichtarray, Vorrichtungen mit beweglichen Sensoren oder Abtastvorrichtungen unter Verwendung von Laserstrahlen, Ultraschallwellen, oder sonstige elektrische oder elektrooptische Erkennungsverfahren eingesetzt werden. Zur Speicherung der gewonnenen Ist-Lage-Daten können anstelle des Schieberegisters auch jegliche andere Speichervorrichtungen, wie Mikroprozessoren und dgl., herangezogen werden.

Die Verwendung der Überwachungsvorrichtung ermöglicht einen Einsatz von einfachen, beispielsweise L-förmigen Schikanenplatten im Bereich der Vororientierungschikane 83. Wenn ein Schenkel dieser L-förmigen Schikanenplatte senkrecht zu seiner Führungsfläche verstellbar ist, so kann die Breite der Führungsbahn an unterschiedlich große Teile rasch angepaßt werden. Mit einem oberhalb der Führungsbahn angeordneten Abweiser kann, wenn dieser der Höhe nach verstellbar ist, ebenso eine universelle Anpassung auf unterschiedliche Dicken von Werkstücken erfolgen.

Solchermaßen werden die Umrüstzeiten der Teilezuführeinrichtung für Serienteile unterschiedlicher Type kurz gehalten und ein kostengünstiger universeller Einsatz dieser Einrichtungen erzielt.

Die Ausbildung der Fördervorrichtung, der Schikanen bzw. der Orientiervorrichtungen sowie der eventuell benötigten Entwirrvorrichtungen — beim Zuführen verwirrter Teile — kann bevorzugt gemäß unserer DE-PS 27 07 856 bzw. der DE-OS 31 35 581 oder 29 34 146 erfolgen.

Die in den Fig. 1, 2, 4, 5, 7 und 8 gezeigten Teilezuführvorrichtungen zeigen vorteilhafte Weiterbildungen, wie sie für die an die erfindungsgemäße Verteilvorrichtungen in Fig. 3 und 6 anschließenden Förderwege verwendet werden können.

## Patentansprüche

1. Teilezuführeinrichtung (1), insbesondere für Montage- bzw. Verpackungsmaschinen (2), mit einem Vorratsbunker (8) für diese Teile (6) einer Fördervorrichtung (9) sowie einer dieser nachgeordneten Orientiervorrichtung (10, 11) der eine mit einem Antrieb verbundene Verteilvorrichtung (14) zugeordnet ist, deren Antrieb (25, 26) mit einer Steuervorrichtung (22) wirkverbunden ist, dadurch gekennzeichnet, daß die zwischen der Fördervorrichtung (9, 71, 72, 82) und zwei parallel zueinander verlaufenden Förderwegen (32, 33, 73-76) zur Lageorientierung der Teile (6, 34, 53, 64, 84) angeordnete Verteilvorrichtung (37, 70) mit unterschiedlichen Förderwegen (15, 16) zusammenwirkende Ausgabestellungen (28) und eine insbesondere um eine parallel zum Förderweg ausgerichtete Achse drehbare Wippe (38, 77) aufweist und die Steuervorrichtung (22) die Wippe (38, 77) in Abhängigkeit von, mit einer Überwachungsvorrichtung (18) ermittelten Kenndaten der Förderung und/oder der Teile (6, 34, 53, 64, 84) in die verschiedenen Ausgabestellungen (28, 40, 41, 58, 59, 75, 76) verstellt und daß die Überwachungsvorrichtung (44) ein zeit- und/oder mengenabhängig beaufschlagbares Meßorgan (45, 46, 47) umfaßt.

2. Teilezuführeinrichtung nach Anspruch 1, dadurch gekennzeichnet, daß der den Förderwegen (73-76) vorgeordneten Verteilvorrichtung (70) zwei spiegelbildlich zueinander angeordnete Fördervorrichtungen (71, 72) vorgeordnet sind.

3. Teilezuführeinrichtung (1) nach Anspruch 1 oder 2, dadurch gekennzeichnet, daß die Verteilvorrichtung (50) zusätzlich eine Umlenkvorrichtung (55) aufweist, die vorzugsweise durch einen, quer zu einem Förderweg (48) verstellbaren Schieber (54) einer die Außenabmessungen eines Teiles (53) festlegenden Überwachungsvorrichtung (51), z. B. ein Kaliber (52), gebildet ist.

4. Teilezuführeinrichtung (1), nach einem der Ansprüche bis 3, dadurch gekennzeichnet, daß die Verteilvorrichtung (14) zusätzlich eine Umlenkvorrichtung (27), z. B. einen Auswerfer (29) für die Teile (6) umfaßt und daß die, der Steuervorrichtung (22) zugeordnete Überwachungsvorrichtung (18) durch eine Lageerkennungsvorrichtung (19), z. B. eine Fernsehkamera (20), gebildet ist, wobei der Umlenkvorrichtung (27) unterschiedliche Förderwege (110, 111, 112, 118) zugeordnet sind und bei einem Abweichen von dem die Soll-Lage des Teiles charakterisierenden Ausgangssignale aus der Überwachungsvorrichtung (18) zur Übergabe des Teiles (6) auf einen der weiteren Förderwege (16) verstellbar ist, von welchen zumindest einer mit dem Vorratsbunker (92) der Fördervorrichtung (82) verbunden ist.

5. Teilezuführeinrichtung nach einem der Ansprüche 1 bis 4, dadurch gekennzeichnet, daß der Steuervorrichtung (97) mehrere Ist-Lage-Geber (98-100) für verschiedene Lagen der Teile (84) zugeordnet sind, und daß an Eingängen (102) von Vergleichern (103-105) die Ausgänge (101) der Lageerkennungsvorrichtung (94) und der Ist-Lage-Geber (98-100) anliegen, wobei die Ausgänge der Vergleicher (103-105) bei übereinstimmenden Eingangssignalen belegt und mit den, den Antrieben (108, 109) zugeordneten Steuerorganen (107, 106) oder einer Speichervorrichtung (122), z. B. einem zum Festhalten der die Lage der Teile (84) kennzeichnenden Daten geeigneten Schieberegister (23) verbunden sind.

6. Teilezuführeinrichtung (1) nach Anspruch 5, dadurch gekennzeichnet, daß der Ausgang der Speichervorrichtung (122) bzw. der Lageerkennungsvorrichtung (94) an einer Steuereinheit (120) einer Handhabungsvorrichtung (119) angeschlossen ist, deren Bewegungsablauf zwischen der Aufnahme und der Ablage des Teiles (84) in Abhängigkeit von den Ist-Lage Daten der Speichervorrichtung (122) bzw. der Lageerkennungsvorrichtung (94) gesteuert ist.

7. Teilezuführeinrichtung (1) nach einem der Ansprüche 5 oder 6, dadurch gekennzeichnet, daß die Kapazität der Speichervorrichtung (122) auf die maximale Speicherkapazität von Teilen (84) zwischen der Lageerkennungsvorrichtung (94) und der Entnahmestelle (117) der Handhabungsvorrichtung (119) abgestimmt ist.

8. Teilezuführeinrichtung (1) nach einem der Ansprüche 5 bis 7, dadurch gekennzeichnet, daß die den Ausgängen der Vergleicher (103-105) nachgeschalteten Antriebe (108, 109) der Verteil- bzw. Umlenkvorrichtungen unterschiedlichen Förderwegen (110, 111, 112, 118) zugeordnet sind und zumindest ein Förderweg (110) mit dem Vorratsbunker (92) der Fördervorrichtung (82) verbunden ist.

9. Teilezuführeinrichtung nach einem der Ansprüche 1 bis 8, dadurch gekennzeichnet, daß die der Verteilvorrichtung (14, 37, 50, 70, 124), insbesondere nachgeordneten Förderwege (15, 16, 32, 33, 48, 49, 73-76, 110-112, 118) mit den Teilen (6, 34, 53, 64, 84) zugeordneten Führungsteilen (65, 66), insbesondere Schikanenplatten, Schikanen, Umlenker, Kaliber oder dgl., aus Kunststoff, z. B. PVC, versehen sind, und daß gegebenenfalls die Schikanenplatte mit den Anschlägen (67), Umlenkkern (68) oder dgl., über einen Kleber (29) verbunden ist.

10. Verfahren zum Orientieren und gegebenenfalls zum Vereinzeln von Teilen, insbesondere an Montage- bzw. Verpackungsmaschinen, bei welchem von einer in einem Vorratsbunker gelagerten ungeordneten Menge dieser Teile, eine Teilmenge entnommen und einem nachgeordnetem Förderweg zugeführt werden, entlang welchem sich in einer bestimmten unrichtigen Lage befindliche Teile ausgeschieden und die anderen Teile zu einer Entnahmestelle verbracht werden, und in dieser ausgerichtet werden, dadurch gekennzeichnet, daß eine Anzahl von Teilen (34), die jeweils einem von zwei Förderwegen (32, 33) zugeführt wird durch voreinstellbare Zeitabstände oder die Anzhal der Teile (34), die dem jeweiligen Förderweg (32, 33) zugeführt werden und bzw. oder in Abhängigkeit von einem Füllstand, insbesondere dem Minimumfüllstand einer Pufferstrecke festgelegt wird.

11. Verfahren zum Orientieren nach Anspruch 10, dadurch gekennzeichnet, daß vorerst immer jenem Förderweg (32, 33), in welchem die Anzahl der Teile (34) einen Minimumfüllstand unterschritten hat, und danach jenem Förderweg (32, 33), bei welchem die Pufferstrecke nicht vollständig mit Teilen (34) gefüllt ist, Teile (34) zugeführt werden.

**Claims**

1. Component feed system (1), particularly for assembling or packaging machines (2) with a storage bin (8) a conveyor device (9) for these components (6), and an aligning mechanism (10, 11) positioned after the latter, which is associated with a distributor device (14) coupled to a drive, of which the drive (25, 26) is operatively coupled to control device (22), characterised in that the distributor device (37, 70) arranged between the conveyor device and two conveying paths (32, 33, 73-76) extending mutually parallel for establishing the positional orientation of the components, has dispensing positions (28) co-operating with different conveying paths (15, 16) and a rocker (38, 77) pivotable around an axis aligned parallel to the conveying path and the control device (22) displaces the rocker (38, 77), in accordance with characteristic data of the conveying system and/or of the components (6, 34, 53, 64, 84) determined by means of a monitoring device (18), to the different dispensing positions (28, 40, 41, 58, 59, 75, 76) and that the monitoring device (44) incorporates a measuring element (45, 46, 47) which may be acted upon as a function of time or quantity.

2. Component feed system according to claim 1, characterised in that the distributor device (70) preceding the conveying paths (73-76) is preceded by two conveyor devices (71, 72) arranged as mirror images of each other.

3. Component feed system (1) according to claim 1 or 2, characterised in that the distributor device (50) has additionally a deflector device (55) which is preferably formed by a slider (54), displaceable transversely to a conveying path (48), of a monitoring device (51) determining the external dimensions of a component (53) e. g. a gauge (52).

4. Component feed system (1) according to one of claims 1 to 3, characterised in that the distributor device (14) additionally incorporates a redirecting device (27), e. g. an ejector (29) for the components (6) and that the monitoring device (18) associated with the control device (22) is formed by a position detecting device (19), e. g. a television camera (20), the redirecting device (27) having different conveying paths (110, 111, 112, 118) associated with it and being displaceable, in case of a deviation of the output signals coming from the monitoring device (18) and characterising the desired position of the component, for transfer of the component (6) to one of the other conveying paths (16) of which at least one is connected to the storage bin (92) of the conveyor device (82).

5. Component feed system according to one of claims 1 to 4, characterised in that associated with the control device (97) are several actual-position-transmitters (98-100) for different positions of the components (84), and that the outputs (101) of the position detector device (94) and of the actual-position-transmitters (98-100) are connected to the inputs (102) of comparators (103-105), the outputs of the comparators (103-105) being energised in the case of coincident input signals and connected to the control elements (107, 106) associated with the drives (108, 109) or to a storage device (122), e. g. a shifting register (23) adapted to record the data characterising the position of the components (84).

6. Component feed system (1) according to claim 5, characterised in that the output of the storage device (122) or of the positional detector device (94) is connected to a control unit (120) of a handling device (119) the sequence of movements of which between the picking up and setting down of the component (84) is controlled as a function of the actual-position data of the storage device (122) or respectively of the position detecting device (94).

7. Component feed system (1) according to one of claims 5 or 6, characterised in that the capacity of the storage device (122) is matched to the maximum storage capacity for components (84) between the positional detector device (94) and the removal point (117) of the handling device.

8. Component feed system (1) according to one of claims 5 to 8, characterised in that the drives (108, 109) of the distributor or redirecting devices, which are post-connected to the outputs of the comparators (103-105), are associated with different conveying paths (110, 111, 112, 118) and at least one conveying path (110) is connected to a storage bin (92) of the conveyor device (82).

9. Component feed device according to one of claims 1 to 8, characterised in that the conveyor paths (15, 16, 32, 33, 48, 49, 73-76, 110-112, 118) positioned after the distributor device (14, 37, 50, 70, 124) in particular, are provided with guiding elements (65, 66) associated with the components (6, 34, 53, 64, 84), especially baffle plates, chicanes, deflectors, gauges or the like, made of plastics material, e. g. PVC, and that if appropriate the baffle plate is joined to the stops (67) deflector (68) or the like, by means of an adhesive (29).

10. A method of directionally positioning and if appropriate for the singling of components, in particular on assembling or packaging machines, in which a part quantity is drawn from a randomly positioned quantity of these components housed in a storage bin and fed at a following position to a conveyor path along which components situated in a particular incorrect position are removed and the other components are carried to a pick-up location and aligned therein, characterised in that a number of components (34) which is fed in each case to one of two conveyor paths (32, 33) is determined by presettable time intervals, or the number of the components (34) which are fed to the respective conveyor path (32, 33) and/or as a function of a charge level, in particular the minimum charge level of a buffer section.

11. A directional positioning method according to claim 10, characterised in that components (34) are initially always supplied to that conveyor path (32, 33) in which the number of components (34) has dropped below a minimum charge level, and thereafter to that conveyor path (32, 33) on which the buffer section is not completely filled by components (34).

## Revendications

1. Dispositif (1) d'alimentation de pièces, en particulier pour des machines (2) d'assemblage ou d'emballage, avec un réservoir de stockage (8) pour ces pièces (6), un dispositif de transport (9) de même qu'un dispositif d'orientation (10, 11) en aval de celui-ci auquel est associé un dispositif de distribution (14) relié à un mécanisme d'entraînement, dont le mécanisme d'entraînement (25, 26) est relié de façon active à un dispositif de commande (22), caractérisé en ce que le dispositif de distribution (37, 70) disposé pour l'orientation en position des pièces (6, 34, 53, 64, 84) entre le dispositif de transport (9, 71, 72, 82) et deux voies de transport (32, 33, 73-76) parallèles entre elles présente des positions de délivrance (28) coopérant avec différentes voies de transport (15, 16) et une bascule (38, 77) disposée de façon à pouvoir tourner en particulier autour d'un axe aligné parallèlement à la voie de transport et le dispositif de commande (22) déplace la bascule (38, 77) dans les différentes positions de délivrance (28, 40, 41, 58, 59, 75, 76) en fonction de données caractéristiques, déterminées par un dispositif de surveillance (18), du transport et/ou des pièces (6, 34, 53, 64, 84) et en ce que le dispositif de surveillance (44) comporte un organe de mesure (45, 46, 47) susceptible d'être sollicité en fonction du temps et/ou de la quantité.

2. Dispositif d'alimentation de pièces selon la revendication 1, caractérisé en ce que deux dispositifs de transport (71, 72) disposés de façon symétrique l'un par rapport à l'autre sont disposés devant le dispositif de distribution (70) qui est disposé devant les voies de transport (73-76).

3. Dispositif d'alimentation de pièces (1) selon la revendication 1 ou 2, caractérisé en ce que le dispositif de distribution (50) présente en outre un dispositif de déviation (55) qui est formé de préférence par une coulisse (54), par exemple un calibre (52), déplaçable transversalement par rapport à une voie de transport (48), d'un dispositif de surveillance (51) déterminant les dimensions extérieures d'une pièce (53).

4. Dispositif d'alimentation de pièces (1) selon l'une des revendications 1 à 3, caractérisé en ce que le dispositif de distribution (14) comporte en outre un dispositif de déviation (27), par exemple un éjecteur (29) pour les pièces (6), et en ce que le dispositif de surveillance (18) associé au dispositif de commande (22) est formé par un dispositif de reconnaissance de position (19), par exemple une caméra de télévision (20), différentes voies de transport (110, 111, 112, 118) étant associées au dispositif de déviation (27), et est déplaçable lors d'un écart par rapport au signal de sortie caractérisant la position de consigne de la pièce provenant du dispositif de surveillance (18) pour transférer la pièce (6) sur l'une des autres voies de transport (16), parmi lesquelles au moins l'une est reliée au réservoir de stockage (92) du dispositif de transport (82).

5. Dispositif d'alimentation de pièces selon l'une des revendications 1 à 4, caractérisé en ce que plusieurs transmetteurs de position réelle (98-100) pour différentes positions des pièces (84) sont associés au dispositif de commande (97), et en ce que les sorties (101) du dispositif de reconnaissance de position (94) et des transmetteurs de position réelle (98-100) sont ajustées aux entrées (102) de comparateurs (103-105), les sorties des comparateurs (103-105) étant occupées dans le cas de signaux d'entrée coïncidant et étant reliées avec les organes de commande (107, 106) associés aux mécanismes d'entraînement (108, 109) ou avec un dispositif de stockage (122) par exemple un registre à décalage (23) susceptible de retenir les données caractérisant la position des pièces (84).

6. Dispositif d'alimentation de pièces (1) selon la revendication 5, caractérisé en ce que la sortie du dispositif de stockage (122) ou du dispositif de reconnaissance de position (94) est reliée à une unité de commande (120) d'un dispositif de manipulation (119), dont le déroulement du mouvement entre la saisie et le dépôt de la pièce (84) est commandé en fonction des données de position réelle du dispositif de stockage (122) ou du dispositif de reconnaissance de position (94).

7. Dispositif d'alimentation de pièces (1) selon l'une des revendications 5 ou 6, caractérisé en ce que la capacité du dispositif de stockage (122) est en accord avec la capacité de stockage de pièces (84) maximale entre le dispositif de reconnaissance de position (94) et la station de prélèvement (117) du dispositif de manipulation (119).

8. Dispositif d'alimentation de pièces (1) selon l'une des revendications 5 à 7, caractérisé en ce que les mécanismes d'entraînement (108, 109) des dispositifs de répartition ou de déviation disposés en aval des sorties des comparateurs (103-105) sont associés à différentes voies de transport (110, 111, 112, 118) et en ce qu'au moins une voie de transport (110) est reliée au réservoir de stockage (92) du dispositif de transport (82).

9. Dispositif d'alimentation de pièces selon l'une des revendications 1 à 8, caractérisé en ce que les voies de transport (15, 16, 32, 33, 48, 49, 73-76, 110-112, 118) disposées en particulier derrière le dispositif de répartition (14, 37, 50, 70, 124) sont munies de pièces de guidage (65, 66), en particulier de plaques à chicanes, de chicanes, de déflecteurs, de calibres ou analogues, en matière plastique, par exemple en PVC, associées aux pièces (6, 34, 53, 64, 84), et en ce qu'éventuellement la plaque à chicanes est reliée aux butées (67), aux déflecteurs (68) ou analogues par l'intermédiaire d'un adhésif (29).

10. Procédé pour l'orientation et éventuellement pour la séparation de pièces, en particulier sur des machines d'assemblage ou d'emballage, dans lequel d'une quantité désordonnée de ces pièces stockées dans un réservoir de stockage, est prélevée une quantité partielle qui est amenée à une voie de transport disposée en aval le long de laquelle les pièces qui se trouveront dans une position incorrecte déterminée sont séparées et les autres pièces sont amenées à une station de prélèvement et sont alignées dans celle-ci, caractérisé en ce qu'un nombre de pièces (34), qui est amené à une voie de transport respective parmi deux voies de transport (32, 33), est déterminé par des intervalles de temps susceptibles d'être prédéterminés ou par nombre des pièces (34) qui sont amenées à la voie de transport (32, 33) correspondante et/ou en fonction d'un niveau de remplissage, en particulier du niveau de remplissage minimum d'une section tampon.

11. Procédé d'orientation selon la revendication 10, caractérisé en ce que les pièces (34) sont conduites d'abord toujours à la voie de transport (32, 33) dans laquelle le nombre des pièces (34) était inférieur à un niveau de remplissage minimum, et ensuite à la voie de transport (32, 33) pour laquelle la section tampon n'est pas complètement remplie de pièces (34).

**Fig. 1**

**Fig. 2**

**Fig. 3**

**Fig. 4**

**Fig. 5**

**Fig. 6**

EP 0 118 593 B1

Fig. 7

Fig. 8